# FASCICULE DE BREVET EUROPEEN

(11) **EP 0 972 150 B1**
(45) Date de publication et mention de la délivrance du brevet: **25.07.2001**
(21) Numéro de dépôt: 98917076.6
(22) Date de dépôt: 25.03.1998
(51) Int. Cl.: F16K 15/20, B60C 29/00

(54) **VALVE POUR ENSEMBLE PNEUMATIQUE ET JANTE EQUIPE D'UNE MEMBRANE DE SOUTIEN PNEUMATIQUE**
VENTIL FÜR EINE FELGE-REIFEN-EINHEIT MIT EINER PNEUMATISCHEN STÜTZMEMBRAN
TYRE AND RIM ASSEMBLY VALVE PROVIDED WITH A PNEUMATIC SUPPORT MEMBRANE

(30) Priorité: 02.04.1997 FR 9704245
(43) Date de publication de la demande: 19.01.2000
(73) Titulaire: Compagnie Générale des Etablissements MICHELIN-MICHELIN & CIE, 63040 Clermont-Ferrand Cedex 09 (FR)
(72) Inventeur: TAILLANDIER, Bernard, F-63118 Cébazat (FR)
(74) Mandataire: Dequire, Philippe Jean-Marie Denis
(86) Numéro de dépôt international: EP9801747
(87) Numéro de publication internationale: WO9844282

(56) Documents cités:
- DE-A- 3 711 785
- US-A- 2 354 912
- US-A- 5 180 455
- US-A- 5 479 976
- US-A- 5 538 061

## Description

L'invention a pour objet une valve destinée à être fixée de façon étanche dans la jante d'une roue pour assurer l'alimentation en air d'un pneumatique sans chambre à air monté sur cette jante et plus particulièrement une valve destinée à équiper des ensembles pneumatique et jante comportant une membrane de soutien pneumatique.

La demande de brevet FR 96/14631 divulgue une membrane pneumatique frettée, réalisée en caoutchouc renforcé, de soutien de la bande de roulement d'un pneumatique sans chambre à air en cas de crevaison de celui-ci. Cette membrane est destinée à être disposée à l'intérieur de la cavité interne définie par le pneumatique et sa jante et à être gonflée à une pression supérieure à celle de la cavité du pneumatique. Dans ces conditions usuelles d'utilisation, la membrane a un rayon de roulement de sommet inférieur au rayon écrasé du pneumatique utilisé à sa pression recommandée. En cas de crevaison du pneumatique, dès que la différence de pression entre la cavité de la membrane et celle du pneumatique dépasse une valeur donnée, la frette de la membrane se rompt, la membrane se déploie dans l'ensemble de la cavité du pneumatique et permet ainsi au pneumatique de poursuivre son roulage dans des conditions acceptables.

Un tel ensemble roulant pneumatique, jante et membrane de soutien peut comporter deux valves de gonflage et de dégonflage séparées. C'est la solution usuelle proposée par exemple par US 5,538,061. Cette solution présente cependant deux inconvénients. Tout d'abord, la présence de deux valves n'est pas souhaitable car cela nécessite un second trou de percement de la jante. D'autre part, ces deux valves ne garantissent pas l'utilisateur contre une erreur de manipulation lors d'une opération d'entretien des pneumatiques qui amènerait accidentellement la différence de pression entre les deux cavités au-delà de la valeur seuil de rupture de la frette de la membrane.

L'invention a pour objet une valve qui résout ce problème.
Une valve pour ensemble pneumatique et jante équipé d'une membrane de soutien est également décrite par le document DE-A-3711785.

La valve selon l'invention est destinée à équiper un ensemble pneumatique et jante définissant une première cavité interne étanche, ledit ensemble comportant une membrane de soutien pneumatique définissant une seconde cavité interne étanche disposée dans la première cavité interne étanche. Cette valve comprend :
- un premier conduit reliant la seconde cavité interne et l'air libre ;
- un second conduit reliant ledit premier conduit et la première cavité interne ;
- une chambre pneumatique étanche reliée au second conduit ;
- des premier moyens de fermeture de la liaison entre le premier et le second conduits, tels que ladite liaison est fermée lorsque la différence de pression entre ledit premier conduit et ladite chambre est inférieure à un premier seuil donné ; et
- des second moyens de fermeture de la liaison entre la chambre pneumatique et le second conduit, tels que ladite liaison est fermée lorsque la pression dans ledit second conduit est inférieure à un second seuil donné.

Préférentiellement, la valeur du premier seuil correspond sensiblement à la différence de pression en fonctionnement normal entre la première et la seconde cavités, et le second seuil est sensiblement égal à la pression de gonflage nominale du pneumatique à froid.

Cette valve a l'avantage de permettre une utilisation très proche de celle des valves usuelles : il n'y a qu'un seul orifice de gonflage ; lors du gonflage, il suffit d'atteindre la pression prévue pour la cavité de la membrane pour que la cavité du pneumatique soit aussi à la pression nominale de gonflage, la liaison entre les deux conduits est alors en position fermée.

De préférence, le premier conduit comprend un clapet anti-retour isolant la seconde cavité étanche, celle de la membrane de soutien pneumatique, du conduit de liaison entre les deux conduits de la valve.

Cette valve permet ainsi de garantir une complète indépendance pneumatique entre les deux cavités. En cas de crevaison, seule la pression dans la première cavité diminue.

La valve selon l'invention, dans un mode de réalisation avantageux, comprend des moyens de mise à l'air libre simultanée des deux conduits d'alimentation des deux cavités pneumatiques. Le dégonflage étant simultané ne risque pas d'entraîner de rupture de la frette de la membrane de soutien.

Un mode de réalisation de l'invention est maintenant décrit à l'aide du dessin annexé dans lequel :
- les figures lA et 1B représentent schématiquement les sections méridiennes diamétralement opposées d'un ensemble pneumatique jante et membrane de sécurité, lorsque le pneumatique est écrasé sous charge et roulant sous des conditions normales ;
- les figures 2A et 2B représentent schématiquement, de la même manière que sur la figure 1, les sections méridiennes de l'ensemble soumis à un roulage en mode dégradé ;
- la figure 3 est une coupe longitudinale d'une valve selon l'invention ;
- la figure 4 présente la liaison entre la valve selon l'invention, la jante et la membrane de soutien.

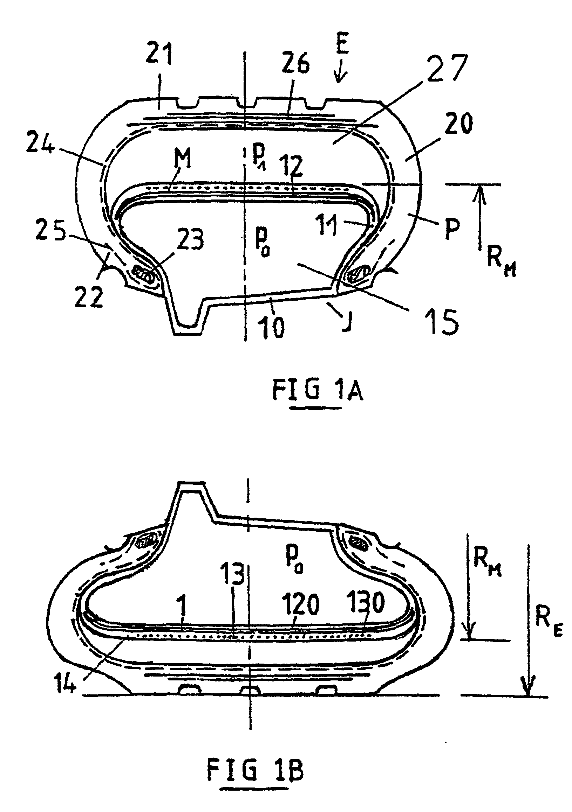

La figure 1 présente un ensemble roulant E composé d'une pneumatique P, d'une jante de montage J et d'une membrane de soutien pneumatique M. Le pneumatique P est un pneumatique universellement connu, avec des flancs 20 réunis radialement à l'extérieur à une bande de roulement 21 et prolongés radialement à l'intérieur à deux bourrelets 22, chaque bourrelet étant renforcé par au moins une tringle 23 autour de laquelle vient s'ancrer une armature de carcasse radiale 24 pour former des retournements 25. L'armature de carcasse 24 est surmontée radialement dans le sommet par une armature de sommet 26, composée d'au moins deux nappes de fils ou câbles métalliques parallèles entre eux dans chaque nappe et croisés d'une nappe à la suivante en faisant avec la direction circonférentielle un angle pouvant être compris entre 5° et 45°. Le pneumatique P est dit sans chambre, et comprend intérieurement une couche de mélange de caoutchouc imperméable aux gaz de gonflage. L'ensemble pneumatique et jante définit une première cavité 27 interne étanche.

La jante J sur laquelle est monté le pneumatique P est une jante de type connu.

La membrane de soutien pneumatique M définit à l'intérieur de la première cavité 27 une seconde cavité 15 étanche. Cette membrane M est fermée et renforcée en son sommet 1 par une armature de sommet 12. L'armature de sommet, facilement expansible, est associée à une armature de frettage 13 composée par exemple d'une nappe 130 de câbles orientés circonférentiellement. Cette nappe 130 de câbles circonférentiels assure la fonction de frettage de la membrane M, frettage d'une part contre les efforts dus à la force centrifuge et d'autre part contre les efforts dus au différentiel de pression p₀ - p₁, p₀ étant la pression de gonflage dans la cavité 15 de la membrane de soutien M, égale à 9,5.10⁵ Pa, et p₁ étant la pression dans la cavité 27 du pneumatique P égale à 9,0.10⁵ Pa. Ces valeurs de gonflage sont les valeurs nominales à froid dans l'exemple choisi. La fonction de frettage permet à la membrane M de conserver, dans les conditions normales de roulage de l'ensemble roulant E, c'est-à-dire dans les conditions de charge, de pression et de vitesse recommandées pour le pneumatique concerné, un rayon R_{M} pratiquement constant et inférieur au rayon R_{E} écrasé du pneumatique P (figure 1B représentant la partie écrasée de l'ensemble dans les conditions normales de roulage).

La membrane M est complétée par le recouvrement de l'armature de frettage 13 par une couche de mélange de caoutchouc 14 de faible épaisseur. Les flancs 11 de la membrane M sont de préférence rainurés par des évidements radiaux 110 qui se prolongent le long de la paroi de la membrane destinée à venir en contact avec la jante J pour permettre un gonflage et un dégonflage aisé de la cavité interne du pneumatique à partir de la valve de l'invention.

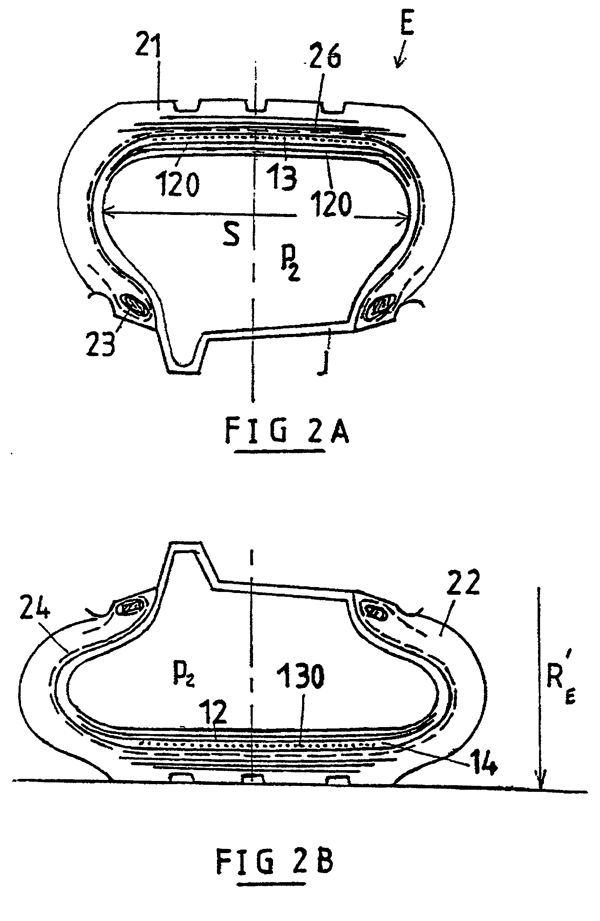

Lorsque le pneumatique P perd de la pression interne, de manière lente ou subite, et quelle que soit la raison de cette perte de pression (p₁ décroît), le différentiel de pression p₀ - p₁ augmente jusqu'à devenir tel que les câbles de la nappe 130 se rompent et permettent ainsi l'expansion de la membrane de soutien M jusqu'à occupation complète de la cavité 27 du pneumatique P (figures 2A et 2B). L'augmentation de volume entraînant une diminution de la pression intérieure p₀ initiale de la membrane M, l'ensemble roulant opère sous une pression p₂ inférieure, conduisant à un rayon écrasé R'_{E} en roulage en mode dégradé inférieur au rayon écrasé R_{E} en roulage normal (figure 1B). Le rayon R'_{E} permet cependant un roulage à vitesse modérée jusqu'à la prochaine aire d'entretien sans dégradation majeure du pneumatique P et sans intervention humaine, aire d'entretien où il est alors possible d'apporter le supplément de pression nécessaire pour obtenir un rayon très voisin du rayon R_{E} et permettre un roulage sous des conditions pratiquement normales, la vitesse du véhicule devant cependant être réduite légèrement du fait des échauffements de l'ensemble sensiblement supérieurs.

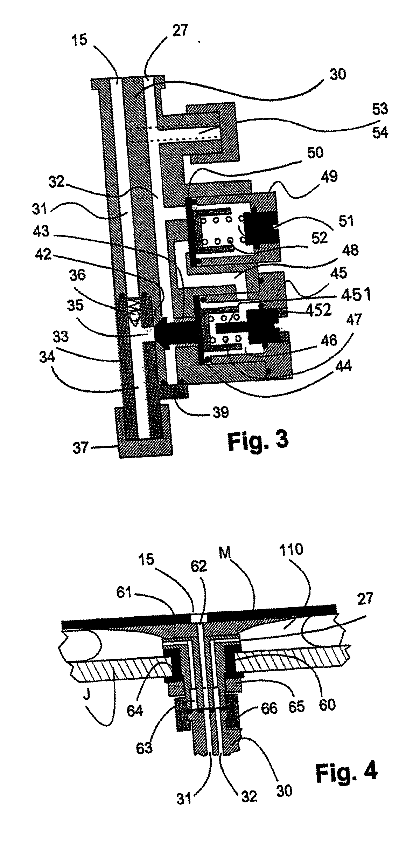

La figure 3 présente en coupe longitudinale une valve 3 selon l'invention destinée à équiper un ensemble E tel que précédemment décrit.

Cette valve 3 comprend un corps de valve 30 avec un premier conduit 31 reliant la cavité 15 de la membrane M à l'air libre et un second conduit 32 reliant la cavité 27 du pneumatique P à l'air libre. Une pièce 33 est fixée au corps de valve 30 du côté débouchant à l'air libre. Cette pièce 33 comprend un bouchon fixe 39 d'obturation du second conduit 32 et un conduit 34 connecté d'une part à l'extrémité du premier conduit 31 et d'autre part à une liaison 35 avec le second conduit. La sortie à l'air libre du conduit 34 est obturée par un bouchon amovible 37. Le conduit 34 comprend un clapet 36 usuel de valve placé au niveau de la connexion avec le premier conduit 31. Ce clapet 36 permet d'isoler complètement la seconde cavité étanche 15, celle de la membrane M pneumatique de soutien. La pièce 33 est amovible de telle sorte de mettre à l'air libre de façon simultanée les deux conduits 31 et 32 et ainsi dégonfler de façon simultanée les deux cavités 15 et 27.

Les deux conduits 31 et 32 sont reliés par le conduit de liaison 35. Ce conduit 35 a un siège 42 qui peut être obturée par le piston 43 fixé à la membrane 44 d'un clapet 45. Ce clapet comporte aussi une chambre 46, un ressort de rappel 47 et un vis 451 de blocage du piston 43 en position de fermeture de la liaison 35. La chambre 46 est reliée au second conduit par la liaison 48 qui peut être fermée par la membrane 50 d'un clapet 49. Ce clapet 49 comprend aussi une chambre 51 et un ressort de rappel d'effort réglable 52. Les conduits 31 et 32 présentent des liaisons 53 et 54 distinctes avec un dispositif de surveillance de la pression non représenté.

Le fonctionnement de la valve 3 est le suivant. Au gonflage, on connecte le conduit 34 à une source de gaz de gonflage pressurisé. Le clapet anti-retour 36 s'ouvre et l'air pénètre dans le conduit 31 pour gonfler la cavité 15 de la membrane de soutien M. Lors d'un premier gonflage, la pression dans la chambre 46 est la pression atmosphérique et dès que la différence de pression entre le premier conduit 31 et la chambre 46 dépasse un seuil de l'ordre de 0,5.10⁵ Pa, le piston 43 se rétracte et la liaison 35 s'ouvre. L'air pénètre dans le conduit 32 et gonfle la cavité 27 interne du pneumatique P. Lorsque la pression dans le second conduit 32 atteint un seuil de l'ordre de 9,0.10⁵ Pa, correspondant à la pression nominale de gonflage du pneumatique P, la membrane 50 du clapet 49 se rétracte et ouvre la liaison entre la chambre 46 et le second conduit 32 par l'intermédiaire du conduit 48. La pression de la chambre 46 devient alors égale à la pression nominale de gonflage du pneumatique et à la pression du premier conduit 31. Cette pression ajoutée à celle du ressort 47 ferme la liaison 35 et le gonflage se poursuit jusqu'à atteindre la pression p₀ dans la cavité 15.

Le dégonflage de la cavité 15 est possible en actionnant le clapet 36, sans modifier la pression dans la cavité du pneumatique P. Il est possible de dégonfler de façon simultanée les deux cavités en retirant progressivement la pièce 33 ce qui met à l'air libre les deux conduits 31 et 32.

Enfin, lors d'une perte accidentelle de gonflage de la cavité 27 du pneumatique P, dès que la pression devient inférieure à la pression p₁, le ressort 51 du clapet 49 obture la liaison entre la chambre 46 et le second conduit 32 ce qui isole complètement la chambre 46 et maintient sa pression interne à au moins la valeur de la pression nominale de gonflage et garde fermée la liaison 35 entre les deux conduits. La cavité 15 est donc ainsi complètement indépendante de la pression dans la cavité du pneumatique et dès que la différence p₀ - p₁ devient supérieure à un seuil donné, de l'ordre de 2,5.10⁵ Pa, la frette rompt et la membrane M se déploie dans l'ensemble de la cavité 27. De plus, la position du clapet anti-retour 36 garantit l'indépendance pneumatique de la cavité 15 en cas de crevaison du pneumatique P et du dégonflage de la cavité 27. L'ensemble roulant pneumatique, jante et membrane de soutien peut alors poursuivre son roulage dans des conditions acceptables. Comme il n'est pas garanti que la pression dans la chambre pneumatique 46 ne diminue pas progressivement, il est prévu de pouvoir, au moyen de la vis 451, bloquer manuellement le piston 43 en position de fermeture du siège 42 de la liaison 35 pour permettre un regonflage de la cavité 15 quelle que soit la pression dans cette chambre pneumatique 46. La butée 452 permet de revenir à la position d'effort de tarage initial.

La valve 3 permet ainsi d'interdire toute erreur de manipulation de l'ensemble roulant E qui entraînerait accidentellement une rupture de la frette 13 et un déploiement de la membrane M.

La figure 4 présente la fixation de la valve 3 à la membrane M et à la jante J. Cette fixation comprend un pied de valve 61 fixé à la partie radialement intérieure de la membrane M prolongé radialement intérieurement par une pièce 60. Le pied de valve 61 et la pièce 60 sont traversés par un conduit 62 connecté d'une part à la cavité 15 au travers de la paroi de la membrane M et d'autre part au premier conduit 31. La pièce 60 est aussi traversée par un conduit 63 cylindrique connecté d'une part à la cavité 27 du pneumatique et d'autre part au second conduit 32. Les rainures 110 assurent une excellente communication entre la cavité 27 du pneumatique et le conduit 63. Le conduit 63 est cylindrique de façon à permettre une bonne connexion avec le conduit 32 quel que soit la position angulaire du corps de valve 30. La pièce 60 assure l'étanchéité de la cavité 27 du pneumatique à travers la jante J grâce à un joint cornière usuel 64 maintenu en place par un écrou 65. Un raccord 66 permet la fixation du corps de valve 30 à la pièce 60.

La valve selon l'invention peut aussi être fixée à toute autre partie de l'ensemble tournant pneumatique/roue/moyeu, à condition que cette partie soit pneumatiquement reliée aux deux cavités à pressuriser.

La valve peut enfin faire partie d'un manomètre de gonflage et comporter un dispositif de liaison que l'on peut raccorder de façon amovible, lors d'une opération d'entretien par exemple, à la pièce 60.

## Revendications

1. Valve (3) pour ensemble pneumatique P et jante J définissant une première cavité interne étanche (27), ledit ensemble comportant une membrane de soutien pneumatique M définissant une seconde cavité interne étanche (15) disposée dans la première cavité interne étanche (27), ladite valve (3) comprenant :
- un premier conduit (31) reliant la seconde cavité interne (15) et l'air libre ;
- un second conduit (32) reliant ledit premier conduit (31) et la première cavité interne (27);
- une chambre pneumatique étanche (46) reliée au second conduit (32) ;
- des premier moyens de fermeture (42, 43, 44, 45, 451, 47) de la liaison (35) entre le premier (31) et le second (32) conduits, tels que ladite liaison (35) est fermée lorsque la différence de pression entre ledit premier conduit (31) et ladite chambre (46) est inférieure à un premier seuil donné ; et
- des second moyens de fermeture (49, 50, 51, 52) de la liaison (48) entre la chambre pneumatique (46) et le second conduit (32), tels que ladite liaison (48) est fermée lorsque la pression dans ledit second conduit (32) est inférieure à un second seuil donné.

2. Valve (3) selon la revendication 1, dans laquelle le premier seuil correspond sensiblement à la différence de pression en fonctionnement normal entre la première et la seconde cavités.

3. Valve (3) selon l'une des revendications 1 et 2, dans laquelle le second seuil est sensiblement égal à la pression de gonflage nominale du pneumatique à froid.

4. Valve (3) selon l'une des revendications 1 à 3, comprenant des moyens de réglage dudit second seuil.

5. Valve selon l'une des revendications 1 à 4, dans laquelle les premiers moyens de fermeture (42, 43, 44, 45, 451, 47) de la liaison (35) entre le premier (31) et le second (32) conduits comprennent un piston d'obturation (43) relié à une membrane élastique (44) adjacente à ladite chambre pneumatique (46).

6. Valve (3) selon l'une des revendications 1 à 5, dans laquelle les premiers moyens de fermeture (42, 43, 44, 45, 451, 47) de la liaison (35) entre le premier (31) et le second (32) conduits peuvent être bloqués en position de fermeture.

7. Valve (3) selon l'une des revendications 1 à 6, dans laquelle le premier conduit (31) comprend un clapet anti-retour (36) isolant la seconde cavité étanche (15) de la liaison (35) avec le second conduit (32).

8. Valve (3) selon l'une des revendications 1 à 7, comprenant des moyens (33, 39) de mise à l'air libre simultanée des premier (31) et second (32) conduits.

9. Valve (3) selon l'une des revendication 1 à 8, dans laquelle ledit second conduit (32) est connecté à un dispositif de surveillance de la pression.

10. Valve (3) selon la revendication 9, dans laquelle ledit premier conduit (31) est connecté à un dispositif de surveillance de la pression.

11. Valve (3) selon l'une des revendications 1 à 10, comportant des moyens de fixation (60, 61, 66) à la membrane de soutien pneumatique M.

## Patentansprüche

1. Ventil (3) für eine Einheit aus Reifen P und Felge J, die einen ersten, dichten Innenhohlraum (27) bilden, wobei die genannte Einheit eine pneumatische Stützmembran M aufweist, die einen zweiten, dichten Innenhohlraum (15) bildet, der im ersten, dichten Innenhohlraum (27) angeordnet ist, und wobei das genannte Ventil (3) die folgenden Merkmale aufweist:
- eine erste Leitung (31), die den zweiten Innenhohlraum (15) mit der Umgebungsluft verbindet;
- eine zweite Leitung (32), die die genannte erste Leitung (31) mit dem ersten Innenhohlraum (27) verbindet;
- eine dichte Luftkammer (46), die mit der zweiten Leitung (32) verbunden ist;
- erste Verschlußmittel (42, 43, 44, 45, 451, 47) zur Verbindung (35) zwischen der ersten (31) und der zweiten (32) Leitung auf eine solche Weise, daß die genannte Verbindung (35) geschlossen ist, wenn die Druckdifferenz zwischen der genannten ersten Leitung (31) und der genannten Kammer (46) eine erste, gegebene Schwelle unterschreitet; und
- zweite Verschlußmittel (49, 50, 51, 52) zur Verbindung (48) zwischen der Luftkammer (46) und der zweiten Leitung (32) auf eine solche Weise, daß die genannte Verbindung (48) geschlossen ist, wenn der Druck in der genannten zweiten Leitung (32) eine zweite, gegebene Schwelle unterschreitet.

2. Ventil (3) nach Anspruch 1, worin die erste Schwelle im wesentlichen der Druckdifferenz zwischen dem ersten und zweiten Hohlraum bei normaler Funktionsweise entspricht.

3. Ventil (3) nach einem der Ansprüche 1 und 2, worin die zweite Schwelle im wesentlichen gleich ist dem Nenn-Aufpumpdruck des kalten Reifens.

4. Ventil (3) nach einem der Ansprüche 1 bis 3, mit Reguliermitteln für die genannte zweite Schwelle.

5. Ventil nach einem der Ansprüche 1 bis 4, worin die ersten Verschlußmittel (42, 43, 44, 45, 451, 47) für die Verbindung (35) zwischen der ersten (31) und der zweiten (32) Leitung einen Absperrkolben (43) aufweisen, der mit einber elastischen Membran (44) neben der genannten Luftkammer (46) verbunden ist.

6. Ventil (3) nach einem der Ansprüche 1 bis 5, worin die ersten Verschlußmittel (42, 43, 44, 45, 451, 47) der Verbindung (35) zwischen der ersten (31) und der zweiten (32) Leitung in der Schließlage blockiert werden können.

7. Ventil (3) nach einem der Ansprüche 1 bis 6, worin die erste Leitung (31) ein Rückschlagventil (36) aufweist, das den zweiten, dichten Hohlraum (15) gegenüber der Verbindung (35) mit der zweiten Leitung (32) isoliert.

8. Ventil (3) nach einem der Ansprüche 1 bis 7, mit Mitteln (33, 39) zum gleichzeitigen Anschluß der ersten (31) und zweiten (32) Leitung an die Luft.

9. Ventil (3) nach einem der Ansprüche 1 bis 8, worin die genannte zweite Leitung (32) an eine Druck-Überwachungsvorrichtung angeschlossen ist.

10. Ventil (3) nach Anspruch 9, worin die genannte erste Leitung (31) an eine Druck-Überwachungsvorrichtung angeschlossen ist.

11. Ventil (3) nach einem der Ansprüche 1 bis 10, mit Mitteln (60, 61, 66) zur Befestigung an der pneumatischen Stützmembran M.

## Claims

1. A valve (3) for a tyre P and rim J assembly, defining a first airtight inner cavity (27), said assembly comprising a pneumatic support membrane M defining a second airtight inner cavity (15) arranged in the first airtight inner cavity (27), said valve (3) comprising:
- a first passage (31) connecting the second inner cavity (15) to the open air;
- a second passage (32) connecting said first passage (31) to the first inner cavity (27);
- an airtight pneumatic chamber (46) connected to the second passage (32);
- first closure means (42, 43, 44, 45, 451, 47) for the connection (35) between the first (31) and the second (32) passages, such that said connection (35) is closed when the pressure difference between said first passage (31) and said chamber (46) is below a first given threshold; and
- second closure means (49, 50, 51, 52) for the connection (48) between the pneumatic chamber (46) and the second passage (32), such that said connection (48) is closed when the pressure in said second passage (32) is below a second given threshold.

2. A valve (3) according to Claim 1, in which the first threshold corresponds substantially to the pressure difference in normal operation between the first and the second cavities.

3. A valve (3) according to one of Claims 1 and 2, in which the second threshold is substantially equal to the rated inflation pressure of the tyre when cold.

4. A valve (3) according to one of Claims 1 to 3, comprising means for adjusting said second threshold.

5. A valve according to one of Claims 1 to 4, in which the first closure means (42, 43, 44, 45, 451, 47) of the connection (35) between the first (31) and the second (32) passages comprise a sealing piston (43) connected to an elastic membrane (44) adjacent to said pneumatic chamber (46).

6. A valve (3) according to one of Claims 1 to 5, in which the first closure means (42, 43, 44, 45, 451, 47) of the connection (35) between the first (31) and the second (32) passages can be blocked in the position of closure.

7. A valve (3) according to one of Claims 1 to 6, in which the first passage (31) comprises a non-return valve (36) isolating the second airtight cavity (15) from the connection (35) with the second passage (32).

8. A valve (3) according to one of Claims 1 to 7, comprising means (33, 39) for simultaneous venting to the open air of the first (31) and second (32) passages.

9. A valve (3) according to one of Claims 1 to 8, in which said second passage (32) is connected to a pressure monitoring device.

10. A valve (3) according to Claim 9, in which said first passage (31) is connected to a pressure monitoring device.

11. A valve (3) according to any one of Claims 1 to 10, comprising means (60, 61, 66) for fixing to the pneumatic support membrane M.
